# EUROPEAN PATENT APPLICATION

(11) **EP 2 835 811 A1**
(43) Date of publication of application: **11.02.2015**
(21) Application number: 13771948.0
(22) Date of filing: 27.03.2013
(51) Int. Cl.: H01H 33/38, H01H 33/40, H01H 33/42, H02B 13/02

(54) **GAS CIRCUIT BREAKER**

(30) Priority: 06.04.2012 JP 2012086995
(71) Applicant: Hitachi, Ltd., Tokyo 100-8280 (JP)
(72) Inventor: URAI Hajime, Tokyo 100-8280 (JP); AOYAMA Yasuaki, Tokyo 100-8280 (JP); HASHIMOTO Hiroaki, Tokyo 100-8280 (JP); SHIRAISHI Katsuhiko, Tokyo 100-8280 (JP); KATO Tatsuro, Tokyo 100-8280 (JP); MORITA Ayumu, Tokyo 100-8280 (JP); ROKUNOHE Toshiaki, Tokyo 100-8280 (JP); OSHITA Yoichi, Tokyo 100-8280 (JP)
(74) Representative: MERH-IP Matias Erny Reichl Hoffmann
(86) International application number: PCT/JP2013/058897
(87) International publication number: WO 2013/150929

(57) **Abstract**

An object is to provide a gas circuit breaker having improved reliability. To solve the above-described problem, a gas circuit breaker is characterized by having a fixed contact, a movable contact configured to come into contact with or separate from the fixed contact, an insulating enclosure internally having the fixed contact and the movable contact, the inside of the insulating enclosure being filled with an insulating gas, and an operating mechanism configured to allow drive force for movement of the movable contact to be generated, wherein the operating mechanism includes a mover including permanent magnets or magnetic bodies disposed in a direction along which the operating mechanism allows the drive force to be generated, and a magnetic pole disposed to be opposed to the mover, and having a winding.

## Description

### Technical Field

The present invention relates to a gas circuit breaker, more specifically relates to a motor-drive gas circuit breaker that is driven by a motor and interrupts high voltage.

### Background Arts

A circuit breaker has a role of preventing spread of an accident of a power system through quickly interrupting a fault current; hence, there is a demand for development of a circuit breaker having higher reliability. It has been known that an operating mechanism for operating a gas circuit breaker includes a spring operating mechanism that ensures operating force through releasing spring force accumulated in an operating spring, and a pneumatic operating mechanism or a hydraulic operating mechanism that uses pneumatic pressure or hydraulic pressure to ensure operating force. To describe each operating mechanism, the spring operating mechanism has small operating force and excellent maintainability and economical efficiency, the pneumatic operating mechanism is easily handled and provides high operating force, and the hydraulic operating mechanism provides high operating force at low noise.

In the operating type with the spring operating mechanism, however, elastic force of a spring is not necessarily constant, positioning accuracy of the spring is low, and the mechanism is complicated and formed of many components; hence, there is a room for improvement in reliability on operation. In the operating type using hydraulic pressure or pneumatic pressure, a working fluid may leak depending on variation in ambient temperature. Furthermore, in one aspect, if only one component has a trouble or failure, the entire mechanism may not function, i.e., the operating type is difficult to be handled.

Techniques solving the above-described problems include, for example, a technique described in Patent document 1 as a technique that generates operating force from electric force. The patent document 1 describes a circuit breaker configuration including an actuator structure having a linearly movable coil to which a current is supplied, in which an insulating rod connected to a coil is linearly moved using repulsive force against magnetic force generated by a fixed cylindrical permanent magnet.

On the other hand, patent document 2 and patent document 3 each describe a technique different from the circuit breaker. Such patent documents each describe an aspect where a mechanism includes magnetic pole teeth disposed so as to sandwich and hold permanent magnets disposed in a movable element, cores connecting in series the magnetic pole teeth sandwiching and holding the magnetic poles, armature windings each being collectively wound on a plurality of the cores, and a mover including magnets of which the magnetic poles are arranged in alternate top and bottom, and a plurality of armature iron cores each including the magnetic pole teeth disposed so as to hold the permanent magnets and the cores connecting in series the magnetic pole teeth holding the magnets, are disposed along a longitudinal direction of the mover.

### Citation List

### Patent document

Patent document 1: Japanese Patent Application Publication (Translation of PCT Application) No. 2007-523475.

Patent document 2: Japanese Patent Application Laid-Open No. 2010-141978.

Patent document 3: Japanese Patent Application Laid-Open No. 2010-239724.

### Summary of the Invention

### Technical Problem

An actuator for the circuit breaker is required to have high acceleration performance, and is necessary to be decreased in mass of a mover. However, the actuator described in the patent document 1 includes a movable winding, and the winding is necessary to have a large diameter to receive a large current. This leads to increase in mass of the winding, and in turn leads to degradation in acceleration performance. In addition, since the winding itself is movable, a current is necessary to be supplied to the winding as a movable body, and therefore wiring design or durability is necessary to be improved. From such various viewpoints, there is a room for improvement in reliability.

The technology described in each of the patent document 2 and patent document 3 is basically not intended to be applied to the circuit breaker.

An object of the invention is therefore to provide a gas circuit breaker having improved reliability.

### Solution to Problem

To solve the above-described problem, a gas circuit breaker according to the present invention is characterized by having a fixed contact, a movable contact configured to come into contact with or separate from the fixed contact, an insulating enclosure internally having the fixed contact and the movable contact, the inside of the insulating enclosure being filled with an insulating gas, and an operating mechanism configured to allow drive force for movement of the movable contact to be generated, wherein the operating mechanism includes a mover including permanent magnets or magnetic bodies disposed in a direction along which the operating mechanism allows the drive force to be generated, and a magnetic pole being disposed to be opposed to the mover and having a winding.

### Advantageous Effects of the Invention

According to the invention, a gas circuit breaker having improved reliability can be provided.

### Brief Description of the Drawings

Figure 1 illustrates block diagrams of a circuit breaker according to Embodiment 1.
Figure 2 illustrates one unit within an operating unit according to Embodiment 1.
Figure 3 is a perspective diagram for explaining one unit of an actuator according to Embodiment 1.
Figure 4 is a front view of Figure 3.
Figure 5 illustrates a state where windings are removed from the configuration of Figure 4.
Figure 6 is a section diagram of a circuit breaker according to Embodiment 2.
Figure 7 is a perspective diagram for explaining an actuator according to Embodiment 3.
Figure 8 is a schematic illustration of the actuator according to Embodiment 3.
Figure 9 is a section diagram of a circuit breaker according to Embodiment 3.
Figure 10 illustrates a control system according to Embodiment 3.
Figure 11 is a schematic perspective diagram of an actuator according to Embodiment 4.
Figure 12 includes front views of Figure 11.
Figure 13 illustrates an exemplary configuration of an actuator including a mover in a two-stage configuration.
Figure 14 illustrates another exemplary configuration of an actuator including a mover in a two-stage configuration.
Figure 15 is a block diagram of actuators arranged in three lines according to Embodiment 5.
Figure 16 is a block diagram of actuators arranged in three lines according to Embodiment 5 in the case where a three-phase invertor is used as a power supply.
Figure 17 is a block diagram of actuators arranged in three lines according to Embodiment 5, where movers are mechanically connected to one another.
Figure 18 is a plan diagram illustrating a setting position of a position holding mechanism according to Embodiment 6.
Figure 19 is a plan diagram illustrating an interrupting position of the position holding mechanism according to Embodiment 6.
Figure 20 is a plan diagram illustrating an intermediate position at which a compression spring has a minimal length, according to Embodiment 6.
Figure 21 illustrates a state where an electromagnetic actuator according to Embodiment 7 is connected to a mechanical operating unit of a circuit breaker.
Figure 22 illustrates the mechanical operating unit to be connected to the electromagnetic actuator in an enlarged manner.

### Description of the Embodiments

Hereinafter, preferred embodiments for carrying out the invention will be described with drawings. The following description merely shows example embodiments, and is not intended to limit the scope of the invention to the specific modes described below. It will be appreciated that the invention itself can be modified or altered into various modes within the scope satisfying the claims.

### <Embodiment 1>

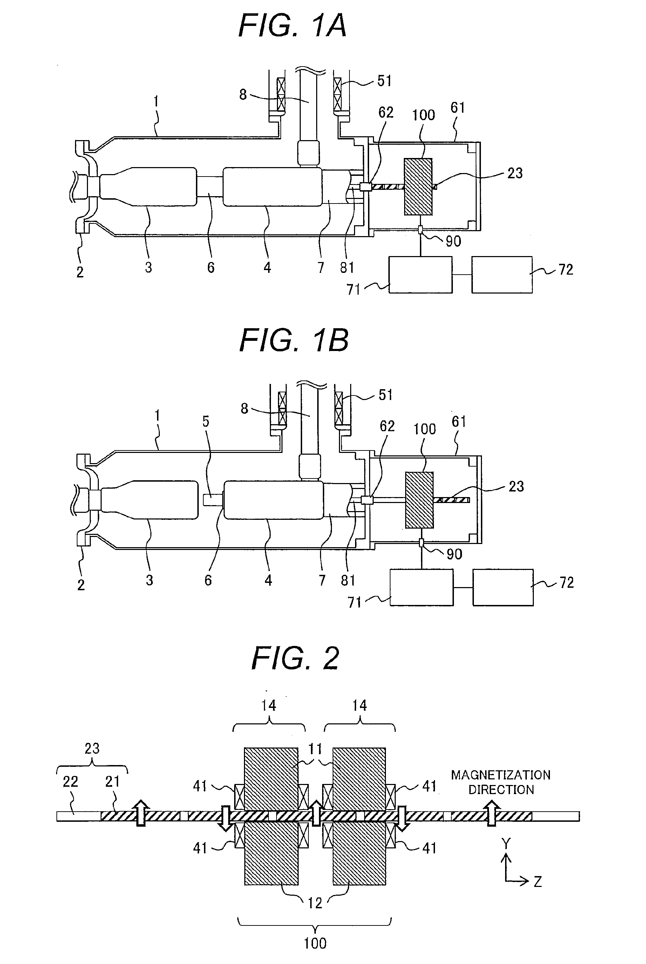

An embodiment 1 is described with Figures 1 to 5. Figure 1 illustrates an exemplary configuration of a circuit breaker in an opened position (a) and a closed position (b). As illustrated in Figure 1, the circuit breaker according to embodiment 1 is roughly divided into an interrupter for interrupting a fault current and an operator for operating the interrupter.

The interrupter includes a sealed metal enclosure 1 of which the inside is filled with SF₆ gas, and includes, within the sealed metal enclosure 1, a fixed side electrode (fixed side contact) 3 fixed to an insulating post spacer 2 provided at an end of the sealed metal enclosure 1, a movable side electrode 4 and a movable electrode (movable side contact) 6, a nozzle 5 provided between the two electrodes on the head of the movable electrode 6, a cylindrical insulating post spacer 7 connected to an operating unit side and to the movable side electrode 4, and a high-voltage conductor 8 connected to the movable side electrode 4 so as to be formed as a main circuit conductor configuring part of a main circuit. In the interrupter, the movable electrode 6 is moved through operating force from the operating unit so that electrical switching is performed, thereby current application or current interruption is enabled. A current transformer 51, which functions as a current detector for detecting a current flowing through the high-voltage conductor 8, is provided around the high-voltage conductor 8. An insulating rod 81 connected to an operating unit side is disposed within the cylindrical insulating post spacer 7.

The operating unit has an operating mechanism casing 61 provided adjacent to the sealed metal enclosure 1, and includes an actuator (operating mechanism) 100 in the operating mechanism casing 61, and a linearly movable mover 23 disposed within the actuator 100. The mover 23 is connected to the insulating rod 81 via a linear sealing section 62 provided in such a manner that the mover 23 can move while the sealed metal enclosure 1 is maintained airtight. The insulating rod 81 is connected to the movable electrode 6. In other words, the movable electrode 6 of the interrupter is allowed to be moved through movement of the mover 23.

The actuator 100 is electrically connected to a power supply unit 71 via a hermetic terminal 90 provided on a surface of the sealed metal enclosure 1 while the insulating gas is enclosed. The power supply unit 71 is further connected to a control unit 72 such that it can receive an instruction from the control unit 72. The control unit 72 is designed to receive a current value detected by the current transformer 51. The power supply unit 71 and the control unit 72 each function as a control mechanism configured to vary an amount or a phase of a current to be supplied to a winding 41 of the actuator 100 described below in accordance with the current value detected by the current transformer 51.

The structure of the actuator is described using Figures 2 to 5. The stator 14 is configured of a combination of two units, each unit including a first magnetic pole 11, a second magnetic pole 12 disposed to be opposed to the first magnetic pole 11, a magnetic body 13 connecting the first magnetic pole to the second magnetic pole, and a windings 41 provided on the outer circumferences of the first magnetic poles and the second magnetic poles. The actuator 100 includes the mover 23 configured of the permanent magnet 21 and magnet fixing components 22 supporting a permanent magnet 21 in a sandwiched manner, the mover 23 being disposed at a position opposed to, with a space therebetween, the first magnetic pole 11 and the second magnetic pole 12 in the inside of a stator 14. The permanent magnet 21 is magnetized in a Y axis direction (vertical direction in Figure 2) alternately oppositely at each of adjacent magnets. The magnet fixing component 22 preferably, but not limitedly, includes a nonmagnetic material, for example, a nonmagnetic stainless alloy, an aluminum alloy, and a resin material. A mechanical part is provided in the actuator 100 in order to maintain a space between the permanent magnet 21 and each of the first magnetic pole 11 and the second magnetic pole 12. For example, a linear guide, a roller bearing, a cam follower, and a thrust bearing are preferred as the mechanical component, but any of other components may be used without limitation as long as the space between the permanent magnet 21 and each of the first magnetic pole 11 and the second magnetic pole 12 is maintained thereby.

In general, attractive force (force in the Y axis direction) is generated between the permanent magnet 21 and each of the first magnetic pole 11 and the second magnetic pole 12. In the configuration of Embodiment 1, however, the attractive force generated between the permanent magnet 21 and the first magnetic pole 11 is in a direction opposite to a direction of the attractive force generated between the permanent magnet 21 and the second magnetic pole 12; hence, such attractive forces compensate each other, and are thus reduced. It is therefore possible to simplify a mechanism for holding the mover 23, and decrease mass of the movable body including the mover 23. Since mass of the movable body can be decreased, high acceleration drive and high response drive can be achieved. Since the stator 14 and the permanent magnet 21 are moved relative to each other in a Z axis direction (horizontal direction in Figure 2), the mover 23 including the permanent magnet 21 moves in the Z axis direction by fixing the stator 14. Conversely, the stator 14 can be moved in the Z axis direction by fixing the mover 23. In such a case, the mover and the stator are reversed. The generated force is merely relative force between the two.

When the actuator is driven, a magnetic field is generated through application of a current to the winding 41, thereby a thrust corresponding to a relative position between the stator 14 and the permanent magnet 21 can be generated. Furthermore, a magnitude and a direction of the thrust can be adjusted by controlling the positional relationship between the stator 14 and the permanent magnet 21, and controlling a phase or a magnitude of a current to be injected. Movement of the mover 23 is controlled in such a manner that when the control unit 72 receives an opening signal or a closing signal, the control unit 72 allows the power supply unit 71 to apply a current to the actuator 100 in response to such a signal, so that an electric signal is converted into force for movement of the mover 23 in the actuator 100.

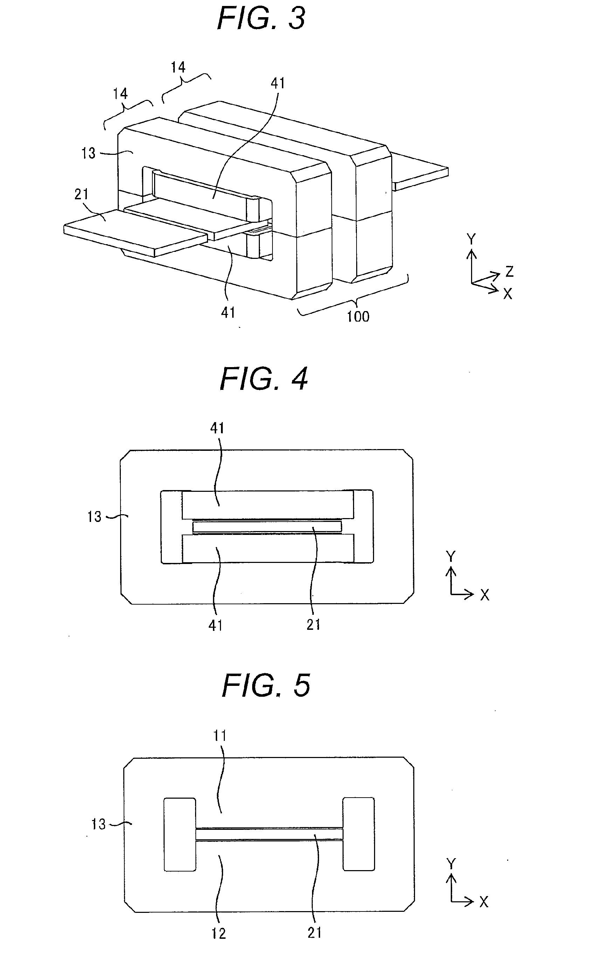

Figure 3 shows a perspective diagram of a configuration of one unit of the actuator 100. As illustrated in Figures 3 to 5, the one unit of the actuator 100 is configured such that the mover having the permanent magnet 21 moves in the Z axis direction relative to the stator 14 configured of the first magnetic pole 11, the second magnetic pole 12, the magnetic body 13 connecting the first magnetic pole 11 to the second magnetic pole 12, and the winding 41. As illustrated in Figure 2, in the mover 23, a plurality of permanent magnets 21 are mechanically connected to one another in a motion axis direction of the movable side contact by a magnet fixing component or the like while the N and S poles are alternately inverted. The first magnetic pole 11 and the second magnetic pole 12 of the stator 14 are disposed to be opposed to such N and S poles of the mover. Application of an AC current to the winding 41 continuously provides a thrust in the Z axis direction, so that a movement distance can be increased in accordance with length of the mover 23.

In Embodiment 1, the magnetic body 13 connecting the first magnetic pole 11 to the second magnetic pole 12 is divided in the Y axis direction. This improves workability of the winding 41. Furthermore, the first magnetic pole 11 and the second magnetic pole 12 can be adjusted to be displaced from each other in the Z axis direction. When the first magnetic pole 11 and the second magnetic pole 12 are disposed to be displaced from each other, thrust can be increased by varying a magnetization direction of the permanent magnet. In addition, the mover can be basically driven in the Z axis direction without using the upper magnetic pole. Such a modification may be specifically considered. Note that the actuator is configured such that the mover is sandwiched by the first and second magnetic poles as in Embodiment 1, whereby small attractive force is generated between the permanent magnet and the magnetic pole. As a result, even if the mover is linearly moved, extremely small blur occurs in a movement direction (the Z axis direction) and in a vertical direction (the axis direction and the Y axis direction). Specifically, in the case of using the actuator for a circuit breaker, even if the mover for transmitting operating force passes through the linear sealing section 62, since deformation of the linear sealing section 62 is slight, a small mechanical load is exerted on the sealing section.

This leads to not only prevention of a trouble in sliding motion of the linear sealing section 62 accompanying the movement but also prevention of tilt of a contact of the movable electrode 6. Hence, there is provided a structure having a low possibility of scoring of a contact sliding part or contamination of a small metal foreigner from each electrode. The scoring may lead to a trouble in current interruption or current application, and the metal foreigner may lead to an insulation fault due to degradation in insulating performance. Furthermore, it is possible to decrease the amount of SF₆ gas that leaks to outside from the inside of the gas circuit breaker along with deformation of the seal. In this way, reliability of the circuit breaker can be improved from various viewpoints.

Figure 4 is a front view of Figure 3. Figure 5 illustrates a state where the windings are removed from the configuration of Figure 4 in order to easily understand a relationship between the first magnetic pole 11, the second magnetic pole 12, and the magnetic body connecting between such magnetic poles in Figure 4. As shown in Figures 4 and 5, the respective windings 41 are wound on the first magnetic pole 11 and the second magnetic pole 12, and are disposed so as to sandwich the permanent magnet 21. Since the winding 41 and the permanent magnet 21 are disposed to be opposed to each other, magnetic flux generated by the winding 41 effectively acts on the permanent magnet 21. Consequently, a small and light actuator is achieved. Furthermore, a magnetic circuit is closed by the first magnetic pole 11, the second magnetic pole 12, and the magnetic body 13 connecting the first magnetic pole to the second magnetic pole. This allows a magnetic circuit path to be shortened. This allows a large thrust to be generated. Furthermore, since the periphery of the permanent magnet 21 is covered with the magnetic body, the amount of flux leaking to outside can be decreased, allowing peripheral devices to be less affected by such flux.

The gas circuit breaker according to Embodiment 1 configured as described above is transferred from the closed position of Figure 1 (a) to the opened position of Figure 1(b) to interrupt a current. In this process, SF₆ gas having arc quenching ability is blown to arc generated in the interrupter, so that arc plasma is dissipated and a fault current is interrupted.

According to Embodiment 1, the circuit breaker is equipped with the actuator including the mover having the permanent magnets arranged in a direction along which the actuator is allowed to generate the drive force, and the magnetic poles that each are disposed to be opposed to the mover and have the winding. Hence, the mover can be decreased in weight compared with the case where the wiring is moved. In addition, the mover may not be wired unlike the case where the wiring is moved. Consequently, reliability can be improved.

Although Embodiment 1 has been described with the case of using the permanent magnet, the actuator can be configured using a magnetic body disposed in the mover instead of the permanent magnet. The magnetic body refers to a material that receives attractive force from a magnet, and typically includes iron, a silicon steel sheet, and the like.

Although gas spaces are separately provided for the interrupter and the operating unit, and the operating unit is driven via the linear sealing section 62 in Embodiment 1, a common gas space may be provided for the interrupter and the operating unit so that the operating unit is filled with the same high-pressure SF₆ gas as that for the interrupter. As illustrated in Figure 1, in the case where the gas spaces are separately provided for the interrupter and the operating unit, the interrupter is filled with high pressure SF₆ gas, while the operating mechanism casing 61 is sealed or unsealed from outside (the atmosphere) depending on cases. In the case where the operating unit is sealed, the inside of the operating mechanism casing 61 is filled with dry air, nitrogen, or SF₆ gas at atmospheric pressure. When the operating unit is sealed, the operating unit is less likely to be affected by external environment, and factors of degradation in performance, such as humidity, rainwater, and entering of insects or the like can be eliminated; hence, a highly reliable operating unit can be provided. However, when the operating unit is sealed, internal inspection is difficult; hence, if a trouble occurs in the operating unit, it is difficult to detect an internal abnormal factor, or perform simple internal maintenance and inspection. If easiness of such internal inspection is prioritized, the operating mechanism casing is not necessary to be sealed.

Although Embodiment 1 shows the exemplary case where the actuator 100 is configured of the two stators 14, it is obvious that the number of stators is not limited thereto. An actuator including only one stator may also be driven as the operating mechanism of the circuit breaker. On the other hand, increasing the number of stators makes it possible to provide a larger thrust in proportion to the number.

### <Embodiment 2>

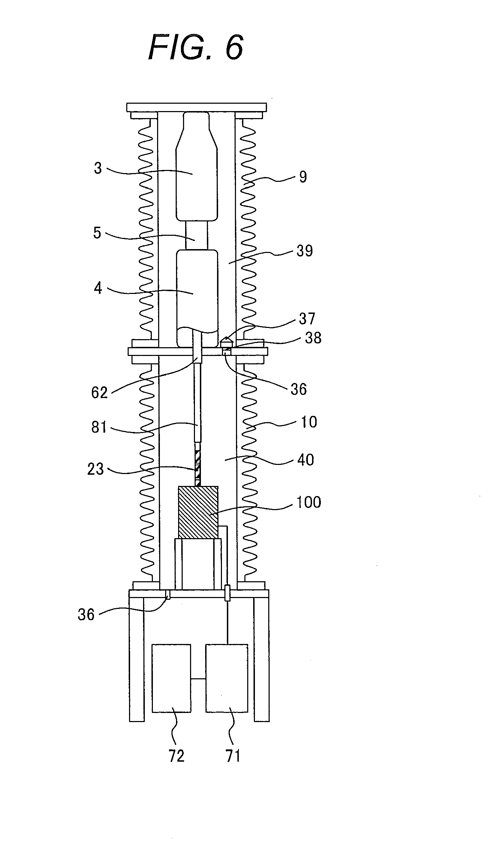

Example 2 is described with Figure 6. The gas circuit breaker according to Embodiment 2 includes a porcelain insulator 9 configured of an insulator such as glass, and includes, in the porcelain insulator 9, a fixed side electrode 3 acting as a fixed side contact, a movable electrode 6 configured to come into contact with or separate from the fixed side electrode 3 so as to act as a movable side contact, and a nozzle 5 provided on a head on a side close to the fixed side electrode 3 of the movable electrode 6, and the inside of the porcelain insulator 9 is filled with SF₆ gas as an insulating gas. Another gas may be used as the insulating gas, examples of which specifically include a mixed gas of SF₆ and N₂ or CF₄ and alternative gas to SF₆ gas, such as CO₂ gas. Another porcelain insulator 10 accommodating the operating unit is attached to a bottom side of the porcelain insulator 9 accommodating the interrupter. In the porcelain insulator 10, there are disposed an actuator 100, a mover 23 configured to project toward the interrupter from the inside of the actuator, an insulating rod 81 provided on a head of the mover 23 on a side close to the interrupter, and an interrupter operating rod 62 (a linear seal section) connecting the insulating rod 81 to the movable electrode 6. The inside of the porcelain insulator 10 is filled with an insulating gas similar to that in the porcelain insulator 9. The two porcelain insulators 9 and 10 communicate with each other through a gas inlet 36, and a decomposition gas filter 38 is provided relatively close to the porcelain insulator 9 in the midway of the gas inlet 36. The decomposition gas filter 38 is covered with a cap 37 in the porcelain insulator 9.

The actuator 100 is connected to the interrupter operating rod 62 (linear seal section) via the insulating rod 81 so that thrust is transmitted to the interrupter. The actuator 100 is a linear actuator described in Embodiment 1, and repeated description is omitted. The linear actuator can be disposed within the porcelain insulator 10 thanks to its small peripheral configuration. Consequently, the gas circuit breaker can be made small, leading to a small footprint compared with a previous spring operating mechanism.

A gas space 39 in the porcelain insulator 9 of the interrupter and a gas space 40 in the porcelain insulator 10 of the operating unit can be configured as gas spaces isolated from each other by the interrupter operating rod 62 (linear seal section) as a linear seal. During current interruption, a powdered SF₆-gas decomposition product is formed by arc generated in the upper interrupter. Although such a decomposition product is deposited on an inner bottom of the porcelain insulator 9, the gas space 40 accommodating the operating unit and the interrupter gas space 39 are formed as separate gas blocks, which prevents the decomposition product from entering the operating unit gas space 40. Consequently, there is no possibility of further increase in sliding resistance.

The gas spaces may not be completely isolated from each other, and may communicate with each other through a decomposition gas filter. Such communicating of the gas space 39 with the gas spacer 40 enables efficient filling and recovery of the insulating gas. Figure 6 illustrates a case where the gas spaces 39 and 40 are allowed to communicate with each other through the gas inlet 36 via the decomposition gas filter 38. Furthermore, the cap 37 is provided on the gas inlet 36. Providing the cap 37 on the gas inlet 36 allows formation of a state where no gas decomposition product enters the gas inlet 36. Since the decomposition product does not enter the operating unit gas space 40, the decomposition product deposits on the actuator, and the sliding resistance is not increased. In addition, in Embodiment 2, the decomposition gas filter is also provided on an inner side (a side close to the gas inlet 36) of the cap 37. Hence, even if the decomposition product enters the gas inlet 36 through a gap in the cap 37, the decomposition product is removed by that filter, and consequently no decomposition product enters the operating unit gas space 40. Consequently, a possibility of further increase in sliding resistance can be decreased.

### <Embodiment 3>

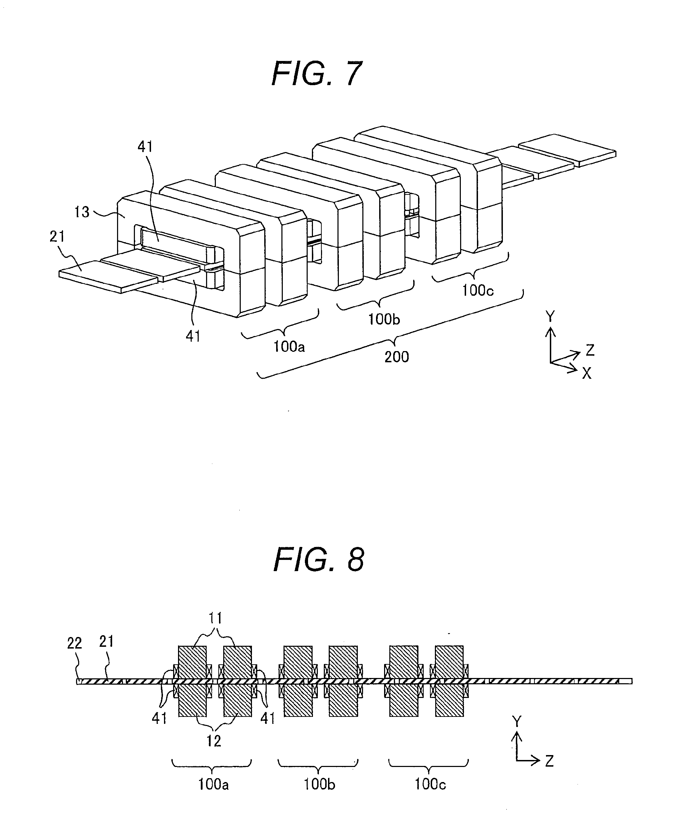

An Embodiment 3 is described with Figures 7 to 10. In Embodiment 3, three-unit actuators 100a, 100b, and 100c are disposed side by side in the Z axis direction (a movement direction of the movable electrode 6). One unit is as described in Embodiment 1, and repeated description is omitted. The three-unit actuators are disposed at positons at which the actuators are electrically shifted in phase from one another with respect to the permanent magnets 21. When one unit is configured of one stator, the three-unit actuators are configured of three stators. Similarly, when one unit is configured of N stators, the three-unit actuators are configured of 3×N stators (configured of stators in multiples of 3). In Embodiment 3, specifically, the actuators 100b and 100c are shifted by 120° (or 60°) and 240° (or 120°), respectively, in electrical phase with respect to the actuator 100a. In this actuator arrangement, application of a three-phase alternating current to the winding 41 of each actuator achieves operation similar to that of a three-phase linear motor. The three-unit actuators are used, whereby the actuators can be individually controlled in current as three independent actuators so that the thrust is adjusted. Currents different in magnitude or phase can be injected from a control mechanism into the windings of the respective actuators. In a possible technique, a three-phase (UVW) current from one AC power supply is dividedly supplied. In this case, a plurality of power supplies are not necessary to be provided, i.e., a simple configuration is given. Furthermore, in this case, there is a choice of whether 3×N hermetic terminals as described above are also provided, or a hermetic terminal is shared between actuators to which the same current is applied.

Figure 8 illustrates a section view of Figure 7. In this configuration, constant thrust can be generated regardless of a positional relationship between the permanent magnets 21 and the structure including the plurality of actuators 200. Furthermore, it is possible to generate braking force (damping force) through control, regenerate power generated by braking, and efficiently use electric power. It is further possible to generate braking force for deceleration of the actuator. This makes it possible to eliminate a need of a traditional brake gear such as a hydraulic operating mechanism or a dashpot of a spring operating mechanism, and thus a small circuit breaker can be achieved. Furthermore, since the number of system components is decreased, reliability and maintainability are improved.

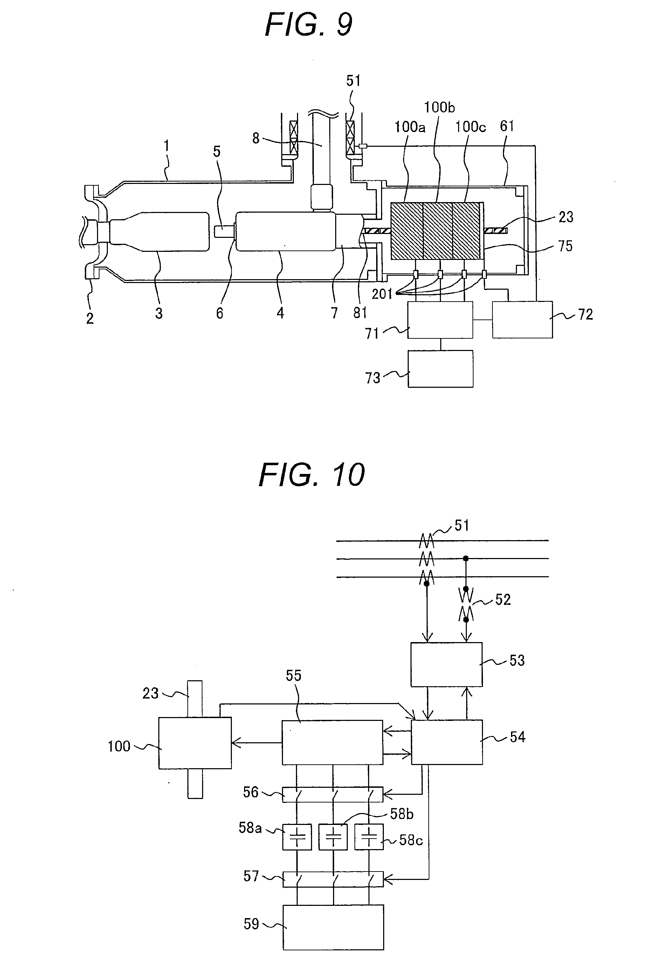

Figure 9 illustrates an aspect where the plurality of actuators described in Figures 7 and 8 are applied to a gas circuit breaker. The overall configuration is as described in Embodiment 1, and description of duplicated portions is omitted. In the configuration of Embodiment 3, a position sensor 75 is provided while being connected to the actuators. Controlling a current to be supplied to the winding of each of the actuators allows a position, speed, and acceleration of each of the mover 23 and the insulating rod 81 to be finely controlled. It is therefore possible to control opening and closing operation or an acceleration/deceleration pattern. To finely control a position, speed, and acceleration of each of the mover 23 and the insulating rod 81, current must be independently supplied to the actuators. A current from the power supply unit 71 is supplied to each actuator through a hermetic terminal 201 such that the current can be supplied in a gas-sealed state. In addition, in Figure 9, even if an operating current from the power supply unit 71 for operating is difficult to be supplied for some reason, electric power is supplied from an electric storage unit 73 configured of a capacitor or a charger to allow current interruption to be secured.

An exemplary configuration of each of the power supply unit 71, the control unit 72, and the electric storage unit 73 is described with Figure 10. In Figure 10, the control unit 72 corresponds to a protection control device 53 to which measurement values are sent from a voltage transformer 52 and a current transformer 51, and an actuator control device 54. An inverter 55 and a power changeover switch 56 correspond to the power supply unit 71. The electric storage unit 73 is configured of a charger 59 and a capacitor 58.

The protection control device 53 in the control unit 72 receives current data and voltage data from the current transformer 51 and the voltage transformer 52. When a system trouble occurs, or when a system receives a switching instruction from an operating unit, the protection control device 53 sends an instruction of current interruption or current application to the actuator control device 54. The actuator control device 54 controls the inverter 55 to allow the actuator 100 to generate thrust. An undepicted position sensor is attached to the actuator 100, and sends positional information to the actuator control device 54 to control operation of the actuator. The position sensor may be replaced with an acceleration sensor, a flux density sensor, or the like to control performance characteristics based on each measurement data.

An electric capacitor having a large capacity is used as the capacitor. In Embodiment 3, the capacitor is divided into a plurality of units 58a, 58b, and 58c, and a charge changeover switch 57 and a power changeover switch 56 are used to individually charge a capacitor unit to be a power supply, and select a capacitor unit to be used for operation. In current interruption, the circuit breaker is necessary to be driven at high speed, and to generate a large thrust to resist puffer reaction force. In current application, time two to four times longer than time for current interruption may be taken, and relatively small thrust may be generated. Hence, different momentary power is required for drive between current interruption and current application. Separately using capacitors between current interruption and current application makes it possible to lower a charging voltage of the capacitor for current application, and use an inexpensive capacitor having a low withstand voltage. There is specification for the circuit breaker, in which a series of operation of current interruption, current application, and current interruption is performed without charging. In some case, a specification of a series of current application and current interruption is further added. Even if such a specification is required, a system is easily extended in correspondence to operating duty by dividing the capacitor as in Embodiment 3. In actual use, continuous operation is not necessarily performed at any time, and it is enough to charge only a capacitor used for operation, allowing charging time to be shortened.

### <Embodiment 4>

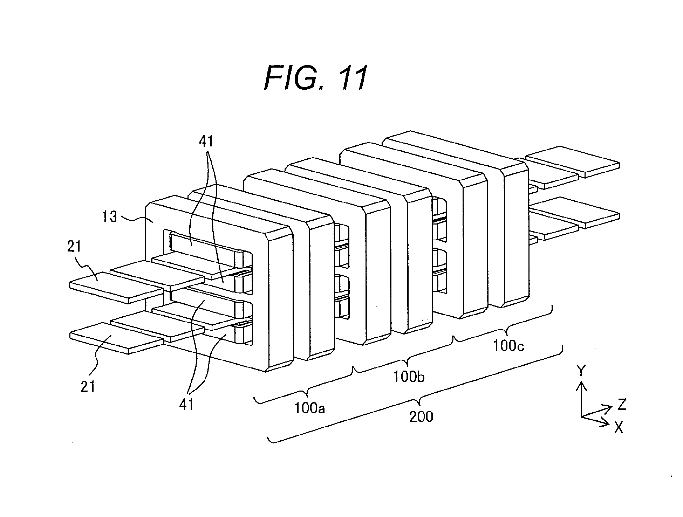

An Embodiment 4 is described with Figures 11 to 14. Description is omitted on portions that each duplicate the content described before. As illustrated in Figure 11, the actuator in Embodiment 4 has a configuration where the actuators illustrated in Figure 3 are double-stacked in the Y axis direction, and two movers provided vertically in parallel run through each stator. Windings 41 are disposed to be opposed to each other in a Y axis direction so as to sandwich the permanent magnets 21 configuring each mover, and vertically provided magnetic poles are connected to each other by a magnetic body 13 outside the movers.

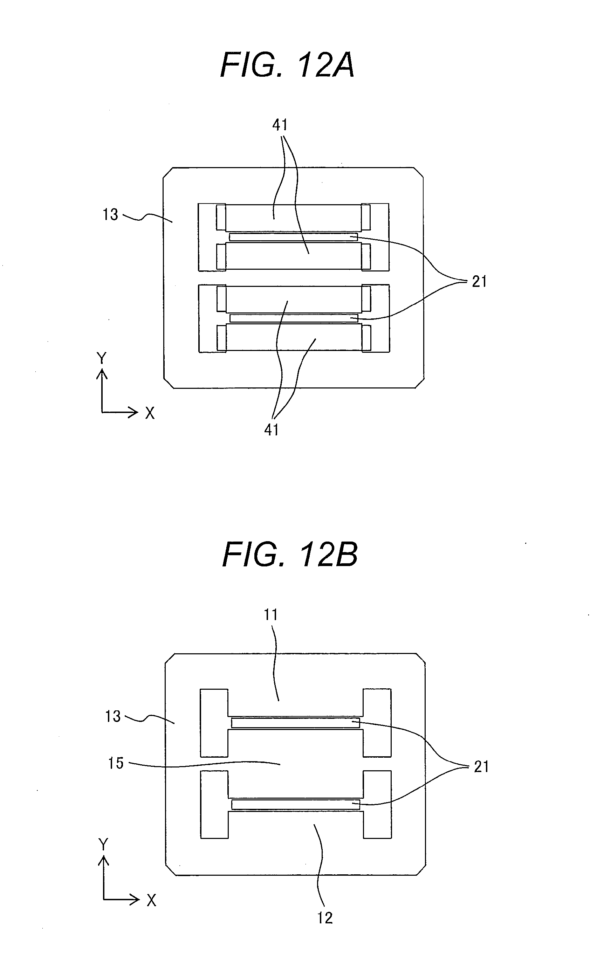

In Figure 12(b), when the Y axis direction is assumed as vertical direction, the stator includes a first magnetic pole 11 on an upper magnet side of the two-stage permanent magnets, a second magnetic pole 12 on a lower magnet side thereof, a third magnetic pole 15 provided between the magnetic poles 11 and 12, and a magnetic body 13 connecting such magnetic poles to one another.

In this way, the actuators are disposed side by side in the Y axis direction, and the magnetic body 13, which is provided in a middle area in the Y axis direction and connects the first magnetic pole 11, the second magnetic pole 12, and the third winding to one another, is shared, whereby a small actuator can be produced. Although Embodiment 3 of the invention has been described with an exemplary configuration where the two actuators are arranged in the Y axis direction, the number and the direction of the actuators are not limited thereto.

Figure 12 illustrates an aspect where the configuration described with Figures 4 and 5 is rearranged into a two-stage configuration as described with Figure 11.

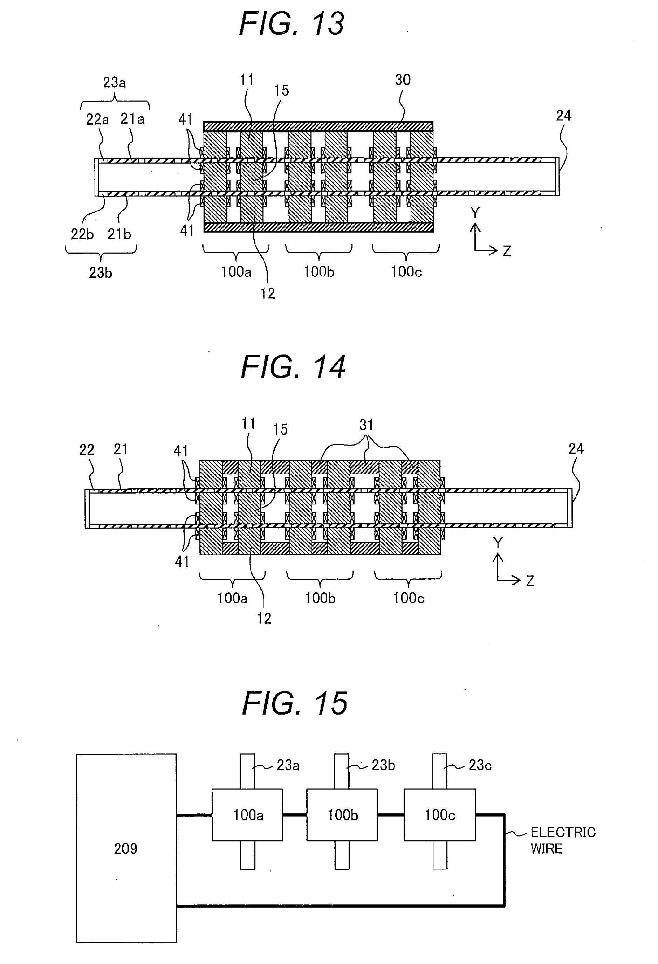

Figures 13 and 14 are each a schematic illustration of another configuration where two actuators are arranged in the Y axis direction. Two movers 23a and 23b arranged in the Y axis direction are connected to each other by mover connecting parts 24, so that the two movers move together. Connecting the movers to each other improves stiffness of the movers, leading to improvement in impact resistance and response.

When the mover moves, reaction force in proportion to thrust is applied to each of portions of the actuator. As a result, deformation of each portion or shift in electrical phase between the mover and the stator occurs due to the reaction force. Fixing a plurality of stators or actuators allows influence of the reaction force to be reduced. In Figure 13, each actuator is fixed to a fixing plate 30, allowing deformation of each portion to be prevented.

Although description with Figure 13 has been made on an exemplary case where deformation of each portion is prevented by fixing each actuator to the fixing plate 30, such a configuration is not limitative. For example, another configuration such as a configuration as shown in Figure 14 may be used. In Figure 14, a spacer 31 is disposed between the respective stators and between the respective actuators, so that deformation of each portion can be prevented. Specific examples of a bonding method of the fixing plate 30 or the spacer 31 include bolting, adhesive application, welding, and other processes.

In the configuration of Embodiment 4, three-stage magnetic poles are used to sandwich the two-stage movers, and thus a high-output power structure can be provided.

### <Embodiment 5>

An Embodiment 5 is described with Figures 15 to 17. Repeated description is omitted on portions having the same configurations and functions as those of portions designated by like numerals in the above description.

The gas circuit breaker is basically necessary to be capable of interrupting a three-phase (UVW) current to be applied to the gas circuit breaker. Figure 15 illustrates a configuration where windings of actuators are arranged in three lines while being connected in series to a power supply 209 such that movable contacts for such three phases can be operated. In this configuration, three actuators are disposed side by side in a direction perpendicular to a direction (movement direction of a mover) along which each actuator is allowed to generate drive force. The actuator may have slight variations in characteristics such as winding resistance and magnet flux due to manufacturing reasons. In Embodiment 5, such variations are prevented. According to a configuration shown as an exemplary case in Embodiment 5, non-uniformity in current due to variations in characteristics of individual actuators can be prevented, and the three actuators can be allowed to operate together.

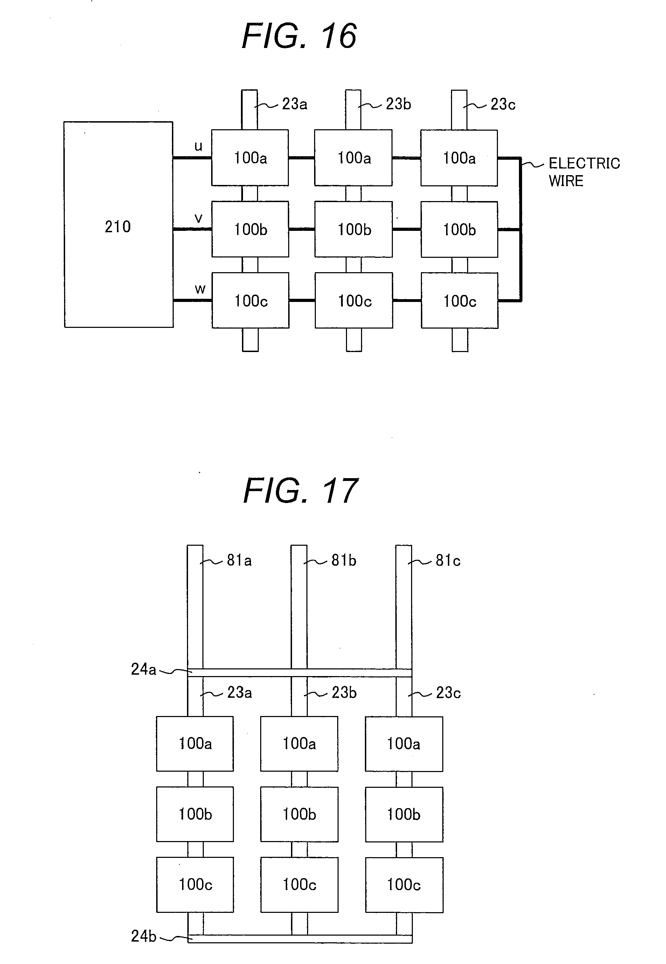

Figure 16 illustrates a case where a three-phase inverter 210 is used in place of the power supply 209 illustrated in Figure 15, so that the actuator is driven as a three-phase actuator. In this case, three actuators are also arranged in a direction along which the actuator is allowed to generate drive force. Since a power supply side also has a three-phase current in Figure 15, 3×3=9 actuators are provided. Actuators 100a, 100b, and 100c have different positional relationships between magnets and stators, and are disposed side by side in three lines in a direction along which a movable contact is allowed to generate drive force. With respect to the respective actuators 100a, 100b, and 100c, actuators in the same arrangement are disposed in series as in Figure 15. It is thereby possible to prevent non-uniform operation of the actuators.

Furthermore, Figure 17 illustrates a case where movers 23a, 23b, and 23c of the three actuators are coupled with one another by a stiff mover connecting part 24. According to this configuration, even if slight non-uniformity occurs between the three movers, since the three insulating rods 81 are physically connected to one another, the three movers can be driven together even from a mechanical point of view. Although such uniform drive of the movers with such coupling may be performed alone, when the uniform drive is performed in conjunction with the uniform control using a current as described with Figures 15 and 16, such two techniques separately function to achieve uniform drive based on the respective different characteristics, and consequently further effective complementary operation is performed.

Moreover, varying length of each of the three insulating rods 81a, 81b, and 81c or a switching position of a switch enables switching operation at a plurality of timings (at different timings depending on the respective insulating rods) even in one-time operation.

Furthermore, the plurality of movers are connected to one another, whereby a position sensor may be satisfactorily attached to one of the connected movers; hence, the number of position sensors for actuator control can be advantageously decreased.

Although Embodiment 5 has been described with configurations any of which includes three movers for U, V, and W, there is principally no problem in varying the number of the movers depending on installation environment. In other words, the number of movers is not limited to that in Embodiment 5.

### <Embodiment 6>

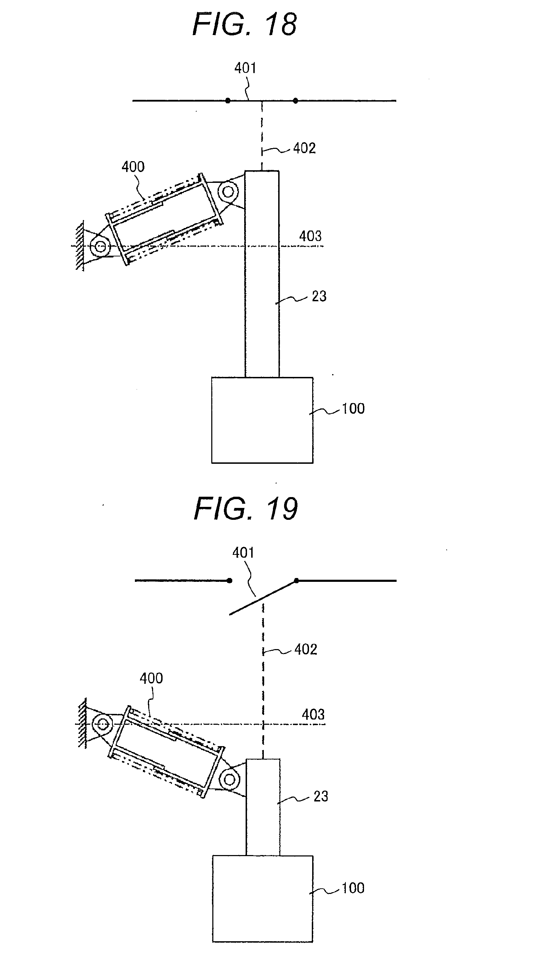

An Embodiment 6 is described with Figures 18 to 20. Position holding of the circuit breaker can also be achieved according to Embodiment shown in Figures 18 to 20.

Figures 18, 19, and 20 illustrate a current application position, a current interruption position, and an intermediate position at which a compression spring 400 has a minimal length, respectively. In Embodiment 6, the compression spring 400 is designed such that a position 403, at which the compression spring 400 has a minimal length (a position at which the spring is most compressed from its natural length), is between the current application position and the current interruption position of the circuit breaker. In addition, the compression spring 400 is coupled with a link system 402 connecting the electromagnetic actuator 100 to the interrupter 401. In other words, the compression spring 400 is configured to be perpendicular to the mover 23 at the intermediate position at which the compression spring 400 has a minimal length. By providing such a relationship, elastic force of the compression spring 400 acts in the current application direction of the circuit breaker at the current application position of the circuit breaker, and acts in the current interruption direction at the current interruption position thereof. Hence, even if the actuator loses operating power due to power failure or the like, the circuit breaker can hold the current application position or the current interruption position against gravity, thrust caused by gas pressure, external vibration, and the like.

### <Embodiment 7>

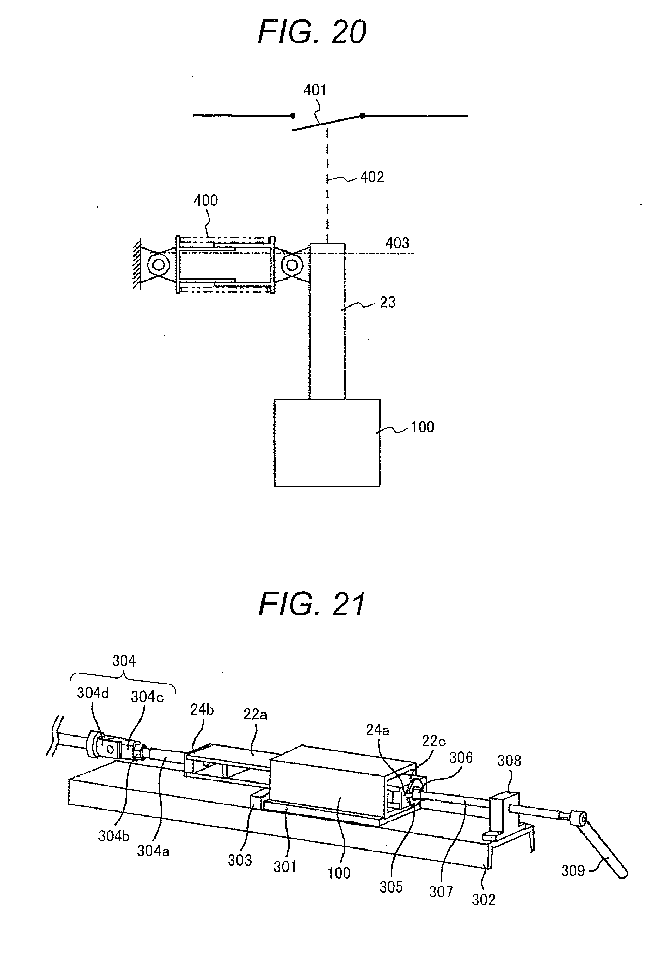

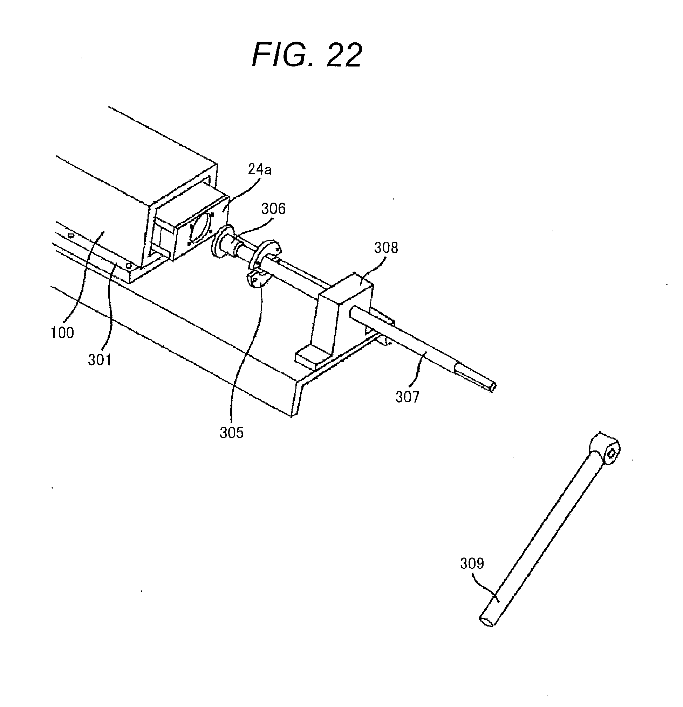

A method of operating an interrupter contact by mechanical operation in a circuit breaker having an electromagnetic actuator is described with Figures 21 and 22. Although an electric storage unit is provided as a measure for loss of a power supply in Embodiment 3, an exemplary case where the circuit breaker is configured to allow manual operation is further described in Embodiment 7.

Specifically, a main frame 302 is fixed to an undepicted circuit breaker (the main frame 302 is formed to extend to a circuit breaker side while only an actuator side is shown in the drawings), and the actuator 100 is fixed to the main frame 302 by bolting or the like via a frame 301 for holding the actuator 100 provided on the frame 302. The frame 302 has a convex portion 303 for positioning, so that the actuator 100 is easily positioned during fastening thereof to the frame 302. At one end (on a manual handle side described below) of the frame 302, a block 308 is connected to the frame 302 by bolting. The block 308 may be left detached in a normal operation state (i.e., in the case of motor-drive control instead of manual control) of the circuit breaker. As illustrated in Figure 22, a through-hole is provided in a middle area of the block 308, and an undepicted female thread is provided in the through-hole. A spindle 307 is engaged with the block 308 while running through the through-hole in a movement direction of the interrupter contact. The spindle 307 has a male thread on its outer circumferential surface. The spindle 307 has the male thread on its outer circumferential surface, while the through-hole provided in the block 308 has the female thread. Hence, the spindle 307 is rotated through operating the manual handle 309 attached to the one end of the spindle 307, and is thus moved in the movement direction of the interrupter contact. While the spindle 307 has the male thread and the through-hole provided in the block 308 has the female thread, the opposite is also acceptable. A disk-like component 306 is fixed by screwing or the like to the other end of the spindle 307.

In the actuator 100, an end metal fitting 24a is provided on a side opposite to the interrupter contact side, and has a space formed such that the disk-like component 306 is rotatable. In manual operation, the disk-like component 306 is inserted in the space provided in the end metal fitting 24a, a support component 305 is provided, and the disk-like component 306 is rotatably supported between the support component 305 and the end metal fitting 24a. The support component 305 is roughly formed in a substantially semicircular shape, and is fastened to the end metal fitting 24a by an undepicted bolt.

A rod 304a of a link system 304 is connected to an end metal fitting 24b on the interrupter contact side of the actuator 100. One end on the interrupter contact side of the rod 304a is connected to a hinge 304c via the nut 304b. The hinge 304c is connected to a link 304d by pinning. The link system 304 is connected to the interrupter contact via an undepicted insulative operating rod in the interrupter. Consequently, the interrupter contact and the actuator 100 are roughly provided on a substantially straight line.

In the case where opening operation of the interrupter contact is mechanically performed, the handle 309 is rotated in an opening direction of the spindle 307 in a state illustrated in Figure 21. This causes the disk-like component 306 to move away from the end metal fitting 24a, but the disk-like component 306 is held by the support component 305; hence, the disk-like component 306 moves together with the end metal fitting. Consequently, the mover of the actuator also moves in the opening direction, and eventually the movable side electrode of the interrupter also moves in the opening direction.

In the case where closing operation of the interrupter contact is mechanically performed, the handle 309 is rotated in a direction opposite to that in the opening operation, whereby the spindle 307 moves forward and the disk-like component 306 comes into contact with the end metal fitting 24a, so that the mover 23 moves in the closing direction. Such movement of the mover 23 in the closing direction causes movement of the movable side electrode of the interrupter in the closing direction.

Although Embodiment 7 has been described with a case of two-stage mover configuration, one-stage or at least three-stage mover configuration is also acceptable. In the case of three or more stages, it is enough that mover connecting parts are provided and connected to the spindle as with the case of two stages. In the case of one stage, since no mover connecting part is provided, a space similar to the above-described space is provided in the mover or a component to be connected to the mover, and a mechanical switching unit such as a spindle should be engaged with the space. Although the shape of the space or the handle has been a circular shape, it will be appreciated that the shape may be another shape. The space should functionally be engaged with the mechanical switching unit such as a spindle so as to allow the switching operation. In the case where the manual handle is used for rotatable operation as in Embodiment 7, it is enough that the mechanical switching unit such as a spindle is supported in a freely rotational manner.

It will be appreciated that each of portions of the circuit breaker in Embodiment 7, the portion having a configuration common to any of other Embodiments, provides a similar effect without even defining the effect in a confirmatory manner.

### Reference Signs List

1...metal enclosure
2...insulating post spacer
3...fixed side electrode
4...movable side electrode
5...nozzle
6...movable electrode
7...insulating post spacer
8... high-voltage conductor
9... interrupter porcelain insulator
10... interrupter support porcelain insulator
11...first magnetic pole
12...second magnetic pole
13... magnetic body
14...stator
15...third magnetic pole
21...permanent magnet
22... magnet fixing component
23...mover
24...mover connecting part
30... fixing plate
31...spacer
36...gas inlet
37...cap
38...decomposition gas filter
39, 40...gas space
41...winding
51... current transformer
52... voltage transformer
53... protection control device
54... actuator control device
55, 210...inverter
56... power changeover switch
57... charge changeover switch
58...capacitor
59...charger
61...operating mechanism casing
62... linear sealing section
71... power supply unit
72...control unit
73... electric storage unit
75... position sensor
81... insulating rod
90... hermetic terminal
100...actuator
200...a plurality of actuators
201...hermetic terminal
209...power supply
301, 302...frame
303... convex portion
304, 402...link system
304a...rod
304b...nut
304c...hinge
304d...link
305... support component
306... disk-like component
307...spindle
308...block
309...manual handle
400... compression spring
401...interrupter
403...minimal length position

## Claims

1. A gas circuit breaker, **characterized by** having a fixed contact, a movable contact configured to come into contact with or separate from the fixed contact, an insulating enclosure internally having the fixed contact and the movable contact, inside of the insulating enclosure being filled with an insulating gas, and an operating mechanism configured to allow drive force for movement of the movable contact to be generated, wherein the operating mechanism includes a mover including permanent magnets or magnetic bodies disposed in a motion axis direction of the movable contact while N poles and S poles of the permanent magnets or magnetic bodies are alternately inverted, and a magnetic pole being disposed to be opposed to the N poles and the S poles of the mover and having a winding.

2. The gas circuit breaker according to claim 1, **characterized in that** the operating mechanism includes a plurality of operating mechanisms, and a plurality of movers of the operating mechanisms are connected to one another and operate together.

3. The gas circuit breaker according to claim 1 or 2, **characterized in that** the operating mechanism includes a plurality of operating mechanisms, and the operating mechanisms are disposed side by side in a direction substantially perpendicular to a motion axis direction of the movable contact, and the windings of the operating mechanisms are electrically connected in series to one another.

4. The gas circuit breaker according to claim 1 or 2, **characterized in that** the operating mechanism includes a plurality of operating mechanisms, and the operating mechanisms are disposed side by side in a motion axis direction of the movable contact and in a direction substantially perpendicular to the motion axis direction, and the windings of the operating mechanisms disposed side by side in the direction substantially perpendicular to the motion axis direction are electrically connected in series to one another.

5. The gas circuit breaker according to claim 4, **characterized in that** the operating mechanisms are disposed side by side in three lines so as to correspond to respective phases of U, V, and W of the gas circuit breaker in the substantially perpendicular direction, and are disposed side by side in three lines in the motion axis direction, and a current having a predetermined one of the phases of U, V, and W is applied for each of the lines to the windings of the operating mechanisms disposed side by side in three lines.

6. The gas circuit breaker according to any one of claims 1 to 5, **characterized in that** the magnetic pole includes a first magnetic pole and a second magnetic pole provided to be opposed to each other, the first magnetic pole is coupled with the second magnetic pole by a magnetic body, the mover is provided in an axially movable manner between the first magnetic pole and the second magnetic pole, and the first magnetic pole has a first winding, while the second magnetic pole has a second winding.

7. The gas circuit breaker according to any one of claims 1 to 5, **characterized in that** the magnetic pole includes a first magnetic pole, a third magnetic pole provided to be opposed to the first magnetic pole, and a second magnetic pole provided to be opposed to the third magnetic pole, the first magnetic pole, the second magnetic pole, and the third magnetic pole are coupled with one another by a magnetic body, the mover includes two movers being separately provided in an axially movable manner between the first magnetic pole and the third magnetic pole and between the third magnetic pole and the second magnetic pole, and the first magnetic pole has a first winding, the second magnetic pole has a second winding, and the third magnetic pole has a winding at each of positions opposed to the first winding and the second winding.

8. The gas circuit breaker according to any one of claims 1 to 7, **characterized in that** a compression spring is provided on the operating mechanism or between the operating mechanism and the movable contact, and the compression spring has a minimal length at a position between a position at which the movable contact comes into contact with the fixed contact and a position at which the movable contact separates from the fixed contact.

9. The gas circuit breaker according to any one of claims 1 to 8, **characterized by** further having a manual handle configured to drive the movable contact, the manual handle being provided on a side of the operating mechanism, the side being opposite to a side close to the movable contact.

10. The gas circuit breaker according to any one of claims 1 to 9, **characterized by** further having a plurality of capacitors configured to supply a current to the winding, and a switching unit configured to change a capacitor supplying a current to the winding during current application or current interruption.

11. The gas circuit breaker according to any one of claims 1 to 10, **characterized in that** the insulating enclosure and an enclosure internally having the operating mechanism are isolated from each other, inside of each of the insulating enclosure and the enclosure being filled with an insulating gas.

12. The gas circuit breaker according to any one of claims 1 to 10, **characterized in that** inside of each of the insulating enclosure and an enclosure internally having the operating mechanism is filled with an insulating gas, the insulating enclosure is allowed to communicate with the enclosure internally having the operating mechanism through a communication hole, and a filter is provided in the communication hole.
